(19) Europäisches Patentamt
European Patent Office
Office européen des brevets

(11) **EP 3 834 361 B1**

(12) **EUROPEAN PATENT SPECIFICATION**

(45) Date of publication and mention
of the grant of the patent:
**12.06.2024   Bulletin 2024/24**

(21) Application number: **19749712.6**

(22) Date of filing: **02.08.2019**

(51) International Patent Classification (IPC):
**H04L 9/08** *(2006.01)*

(52) Cooperative Patent Classification (CPC):
**H04L 9/0877; H04L 9/0869;** H04L 2209/84

(86) International application number:
**PCT/EP2019/070848**

(87) International publication number:
**WO 2020/030536 (13.02.2020 Gazette 2020/07)**

(54) **METHOD OF MANAGING PRIVATE CRYPTOGRAPHIC KEYS**

VERFAHREN ZUR VERWALTUNG PRIVATER KRYPTOGRAFISCHER SCHLÜSSEL

PROCÉDÉ DE GESTION DE CLÉS CRYPTOGRAPHIQUES PRIVÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **06.08.2018   GB 201812717**

(43) Date of publication of application:
**16.06.2021   Bulletin 2021/24**

(73) Proprietor: **Continental Automotive Technologies
GmbH
30175 Hannover (DE)**

(72) Inventor: **WANG, Yi
Singapore 090102 (SG)**

(74) Representative: **Continental Corporation
c/o Continental Automotive Technologies GmbH
Intellectual Property
Guerickestraße 7
60488 Frankfurt a. Main (DE)**

(56) References cited:
**US-A1- 2010 254 537      US-A1- 2011 289 324
US-A1- 2012 321 076      US-A1- 2016 156 468
US-B1- 6 393 565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF INVENTION

This invention relates to arrangements for secure communication.

BACKGROUND OF INVENTION

As vehicle systems become increasingly connected with other vehicle systems within a vehicle, with other vehicles' systems, and even with servers and web browsers, it becomes necessary to protect any sensitive information being communicated. A typical way of encrypting sensitive information is through the use of private cryptographic keys. A private crytographic key is known only to the originating computer and data is encrypted by applying an algorithm using the private cryptographic key to make them unintelligible. To obtain the data, the private cryptographic key is again needed to decrypt the data.

Appropriate storage of cryptographic keys is important to maintain the security value of any cryptographic arrangement, and unauthorized access to the cryptographic keys may ultimately lead to unauthorized access to the data they protect, thereby compromising the entire arrangement. Therefore, hardware security modules are typically used to store cryptographic keys as they provide storage which is physically separated from the main system. However, the memory slots in hardware security modules can usually store up to ten 128-bit private keys, thus limiting the possibilities to support future enhanced security features since enhanced features typically requires the storage of extra private cryptographic keys. This limited space becomes especially challenging when internet-of-things and other connected services are implemented in vehicles. In addition, this secure memory in hardware security modules is quite costly and therefore increasing memory space is not an economical solution. Therefore, there is a need to provide alternatives or improvements to overcome or at least ameliorate the space limitation of hardware security modules and other disadvantages discussed above.

United States Patent Application Publication document US 2011/289324 A1 discloses re-classifying certain keys being stored in protected for storage in conventional memory, after being encrypted with a key encryption key which is stored in protected memory, based on a set of rules.

United States Patent US 6,393,565 B discloses storing data in an overflow memory when the memory space in a limited cryptographic storage unit is insufficient.

United States Patent Application Publication document US 2016/156468 A1 discloses the splitting of a content key into two sub-keys Kt-H and Kt-L, both of which are encrypted.

SUMMARY

It is therefore an object to provide a method and a control unit to address the problems discussed above. Particularly, it is an object to provide a method and an associated control unit that addresses the problem of a shortage of storage space in the hardware security module. It is an object to provide a method that can securely store private cryptographic keys outside of a hardware security module. It is a further object to provide a method of storing private cryptographic keys in an environment that is less secure than that of a hardware security module.

To accomplish these and other objects, there is provided, in a first aspect, a method of managing private cryptographic keys, the method comprising: determining whether non-transitory memory of a hardware cryptographic module is available in response to a request to store a private cryptographic key; in the event the non-transitory memory of the hardware cryptographic module is available, storing the private cryptographic key therein; in the event the non-transitory memory of the hardware cryptographic module is insufficient: encrypting, by the hardware cryptographic module, the private cryptographic key with a session parameter comprising a short-term session key and a random number, to produce a first encrypted parameter; encrypting, by the hardware cryptographic module, the session parameter with a nesting parameter comprising a nesting key and a random number, to produce a second encrypted parameter, wherein the encrypted private cryptographic key comprises the first encrypted parameter and the second encrypted parameter; storing the encrypted private cryptographic key in a second non-transitory memory having lower security certification than the non-transitory memory of the hardware cryptographic module.

Advantageously, the disclosed method allows private cryptographic keys that otherwise need to be stored in a secure environment, to be suitable for storing outside of the secure environment, in a less secure environment.

The session parameter may be generated, by the hardware cryptographic module, for each private cryptographic key to be stored in the second non-transitory memory. The session parameter may be a short-term cryptographic key generated specifically for protecting the private cryptographic key to be stored. The session parameter may not persist and may be deleted when power is cut. Therefore, the session parameter may provide freshness value to the disclosed method, advantageously reducing or negating the risk of replay attacks.

In a second aspect, there is provided an electronic control unit comprising: at least one processor; non-transitory memory; and a hardware cryptographic module in electronic communication with the non-transitory memory and the at least one processor, the hardware cryptographic module comprising non-transitory memory and a processor, wherein at least one of said non-transitory memories comprises a plurality of instructions stored thereon which, when executed by at least one of said processors, cause the at least one processor to perform the disclosed method.

The electronic control unit may be a gateway device. As gateways facilitate the flow of data between networks, including a hardware cryptographic module in a gateway may be effective to identify and encrypt any sensitive data flowing therethrough.

BRIEF DESCRIPTION OF DRAWINGS

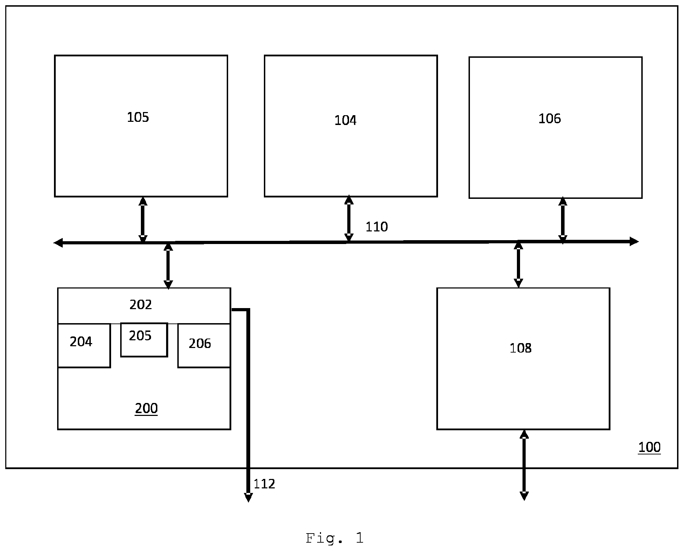

Fig. 1 shows an illustration of an electronic control unit 100 incorporating a hardware security module 200, in accordance with an embodiment of the present invention, wherein the hardware security module 200 is configured to encrypt a private cryptographic key and store the encrypted cryptographic key in non-transitory memory 104 of electronic control unit 100 should the storage space in non-transitory memory 204 be insufficient.

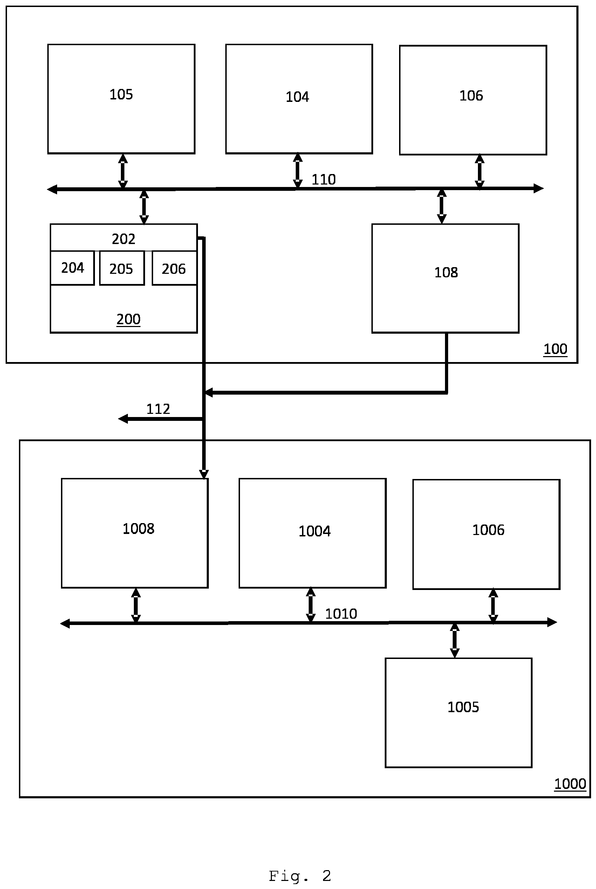

Fig. 2 shows an illustration of electronic control unit 100 incorporating hardware security module 200, in accordance with an embodiment of the present invention, wherein hardware security module 200 is configured to encrypt a private cryptographic key and store the encrypted cryptographic key in non-transitory memory 1004 of electronic control unit 1000 should the storage space in non-transitory memory 204 be insufficient.

In the figures, like numerals denote like parts.

DETAILED DESCRIPTION

Hereinafter, exemplary embodiments of the present invention will be described in detail with reference to the accompanying drawings. The detailed description of this invention will be provided for the purpose of explaining the principles of the invention and its practical application, thereby enabling person skilled in the art to understand the invention for various exemplary embodiments and with various modifications as are suited to the particular use contemplated. The detailed description is not intended to be exhaustive or to limit the invention to the precise embodiments disclosed. Modifications and equivalents will be apparent to practitioners skilled in this art and are encompassed within the spirit and scope of the appended claims.

In an embodiment, there is provided a method of managing private cryptographic keys. The method comprises determining whether non-transitory memory of a hardware cryptographic module is available in response to a request to store a private cryptographic key. In the event the non-transitory memory of the hardware cryptographic module is available, the method comprises storing the private cryptographic key therein. On the other hand, in the event the non-transitory memory of the hardware cryptographic module is insufficient, the method comprises: encrypting, by the hardware cryptographic module, the private cryptographic key with a session parameter to produce a first encrypted parameter; encrypting, by the hardware cryptographic module, the session parameter with a nesting parameter to produce a second encrypted parameter; and storing the encrypted private cryptographic key in a second non-transitory memory having lower security certification than the non-transitory memory of the hardware cryptographic module. The first encrypted parameter and the second encrypted parameter make up the encrypted private cryptographic key.

A "hardware cryptographic module" refers to a secure hardware product that generates, safeguards, stores, and generally manages private cryptographic keys for encryption and decryption of sensitive data in applications requiring real-time processing, such as for automotive applications. To meet such real-time requirements, hardware cryptographic modules encompassed by the present disclosure typically perform symmetric encryption algorithms. Thus, the hardware cryptographic module of the present disclosure is configured to complete a round of operations in low clock cycles, e.g. less than 100 clock cycles or even less than 50 clock cycles. An example is a hardware security module (HSM) which is a physical, tamper resistant, computing device that is configured to safeguard and manage cryptographic keys for authentication and provide cryptographic processing such as, but not limited to, encryption, decryption, key generation and hashing. Therefore, the HSM includes software or firmware to provide such cryptographic processing. The HSM may come in the form of a chip, card or module. Another example of a hardware cryptographic module is a secure hardware extension (SHE) that provides a secure zone to an electronic unit. The hardware cryptographic module may be incorporated into another device to provide cryptographic keys and cryptographic processing to that device. For example, a HSM may be integrated, e.g. soldered, onto an electronic control unit (ECU) of a vehicle so as to encrypt data going into and coming out of the ECU. Alternatively, the hardware cryptographic module may be external to the other device and may communicate with the device via a secured network or a direct attachment or connection. While incorporating a hardware cryptographic module into every vehicle ECU may provide comprehensive automotive security, it may not be economical. Therefore, choosing an ECU to incorporate a hardware cryptographic module so as to effectively protect data communicated within and with the vehicle is imperative. Non-limiting examples of an electronic control unit that may interface with a hardware cryptographic module include in-vehicle gateways, data communication modules, body control modules or driver assistance systems.

As would be appreciated by a person skilled in the art, the architecture of a HSM typically includes non-transitory memory such as flash memory, fuse memory, non-volatile memory, non-volatile random access memory, and solid state drives; transitory or volatile memory such as random access memory; input-output interfaces; hardware and firmware infrastructure to support the functions of a HSM, such as cryptographic engines, hash functions, and a random number generator; a state machine to execute the functions, e.g. a processor or coprocessor; and circuitry to enable increased performance such as a hardware accelerator. The above-described components of the HSM are exemplary and may be present as individual components or combined or omitted. Other hardware cryptographic modules may include the above-described functions and some or all of the components described above or even other components necessary to execute the functions.

A private cryptographic key is a piece of code that is fed into an encryption algorithm which then encrypts information or data requiring encryption. As would be appreciated by a person skilled in the art, creation of private cryptographic keys is typically done by a key generator or a random number generator together with hash functions. Thus private cryptographic keys are typically a pseudo-random number. In the disclosed method, there are different cryptographic keys that may be included in security computations to enhance the security of an ECU, for example a long-term private cryptographic key, a nesting key and a short-term private cryptographic session key.

The long-term private cryptographic key is used for the life time of an ECU, and may be used to encrypt a particular type of data, e.g. vehicle speed data, that is generated by or received by the ECU, or to encrypt a particular set of data transmitted between certain ECUs, e.g. diagnostic trouble codes transmitted between the engine control unit and the telematics unit, or between an ego vehicle and a neighboring vehicle, e.g. vehicle speed and/or geolocation data, or to encrypt a particular type of data transmitted between a group of ECUs, e.g. handshake acknowledgements from a group of ECUs at the rear of a vehicle to the gateway. The private cryptographic key to be stored in the disclosed method refers to this long-term private cryptographic key, i.e. the key that encrypts the data. Thus, the term "private cryptographic key" is synonymous with the terms "private key", "secret key", or data encryption key (DEK), and refers to the key that encrypts and decrypts the data. Long-term means that the electronic data, or in this case a private cryptographic key, continues to persist or exist when there is no power, and hence long-term electronic data is stored in non-transitory memory. When the data to be protected is generated or transmitted for the first time, the long-term private cryptographic key may be generated, whether by the hardware cryptographic module or by other means such as software algorithms, in order to encrypt the data. After generation, the private cryptographic key needs to be kept, thus the request is triggered to store the private cryptographic key.

Another cryptographic key that may be used in the disclosed method may include a session key. As the name connotes, the session key is a short-term private cryptographic key which is revoked after each session is closed. However, during the session, the session key has to be stored to enable cryptographic processing, e.g. according to the disclosed method. Such short-term cryptographic key may be stored in volatile memory. As used throughout this disclosure, a "session" refers to each instance a private cryptographic key is required to be encrypted so that it can be stored in the second non-transitory memory, or each period of time computations or operations are performed to encrypt the private cryptographic key. A session key is an embodiment of a session parameter. Thus similarly, a "session parameter" refers to a parameter that is generated for each time a long-term private cryptographic key requires storage in a non-secure environment. For example, when a diagnostic trouble code (DTC) is transmitted from the engine control unit to the telematics unit, a DEK to encrypt the DTC may be generated by a hardware cryptographic module incorporated in the engine control unit. After the encrypted DTC is transmitted, the DEK is to be stored in the hardware cryptographic module but it is determined that storage space is insufficient. A session parameter is therefore generated by the hardware cryptographic module to encrypt the DEK.

Yet another private cryptographic key that may be used in the disclosed method may include a nesting key. The function of the nesting key will be described further below.

It may thus be appreciated that many private cryptographic keys of different purposes are generated that require storage as they are either used for a lifetime or at least during security computations. Where a hardware cryptographic module is involved, the problem of storage space for storing the many private cryptographic keys is encountered due to limited storage space. However, in the disclosed method, at least some of the private cryptographic keys that encrypt data may be securely stored outside the secure memory of the hardware cryptographic module in case the hardware cryptographic module does not have sufficient space or the storage space is unavailable, thereby overcoming the problem of a shortage of non-transitory storage space in the hardware cryptographic module.

In case the hardware cryptographic module does not have sufficient space or the storage space is unavailable, the private cryptographic key that encrypts data may be stored in a second non-transitory memory having lower security certification than the non-transitory memory of the hardware cryptographic module. The second non-transitory memory may be in an environment that is less secure as compared to the non-transitory memory of the hardware cryptographic module. The second non-transitory memory may be one that is not associated with the hardware cryptographic module. For ease of reference, the second non-transitory memory may be referred to as an unsecure memory. Being more secure or having higher security certification means that the memory or the module with the memory employs strategies such as memory allocation segregated for a process, encryption, forced isolation, physical isolation or combinations, such that the data stored therein cannot be accessed by a third party that does not possess the requisite authentication.

Where the hardware cryptographic module is incorporated into another device, the second non-transitory memory may also be incorporated into that device. In an example, the hardware cryptographic module may be incorporated into a first electronic control unit of a vehicle, wherein the second non-transitory memory is also part of or incorporated into the first electronic control unit. Fig. 1 shows an illustration of this example, where a HSM 200 is located on an ECU 100 and communicates with ECU 100' s unsecure components such as processor 105, non-transitory memory 104, volatile memory 106 and bus communication interface 108, through internal bus system 110. HSM 200 has its own secure non-transitory memory 204 in which private cryptographic keys and nesting keys, among other data such as firmware, can be stored. HSM 200 also has its own secure volatile memory 206 in which process-related data or short-term parameters, such as session keys as disclosed herein, can be stored. In the event the storage space in non-transitory memory 204 is insufficient to store a private cryptographic key that needs to be stored, the key may be encrypted according to the disclosed method and securely stored in non-transitory memory 104. Thus in this example, ECU 100 comprises: processor 105; non-transitory memory 104; and HSM 200 in electronic communication with the non-transitory memory 104 and the processor 105. The HSM 200 comprises non-transitory memory 204 and a processor 205. At least one of non-transitory memories 104 and 204 comprises a plurality of instructions stored thereon which, when executed by at least one of processors 105 and 205, cause the at least one processor to perform the disclosed method. An example of ECU 100 is a gateway device, wherein non-transitory memory of the gateway device is configured to store encrypted private cryptographic keys.

In another example, the second non-transitory memory may be part of or incorporated into a second electronic control unit. Fig. 2 shows an illustration of this example, where, in case the storage space in non-transitory memory 204 of HSM 200 is insufficient, the DEK may be programmed to be securely stored in non-transitory memory 1004 of ECU 1000. In this example, the DEK encrypted in HSM 200 according to the disclosed method is sent to the communication interface 1008 of ECU 1000 for transmitting to non-transitory memory 1004 through bus 1010. Thus in this example, ECU 100 is in electronic communication with second electronic control unit 1000 which comprises non-transitory memory 1004 configured to store encrypted private cryptographic keys and also in electronic communication with non-transitory memory 104 configured to store encrypted private cryptographic keys. In other words, ECU 100 comprises: processor 105; non-transitory memory 104; and HSM 200 in electronic communication with the non-transitory memory 104, the processor 105, as well as non-transitory memory 1004 of ECU 1000 configured to store the encrypted private cryptographic keys. Alternatively, the HSM 200 may be a standalone module (not shown), i.e. not integrated with ECU 100, but communicates with ECU 1000 for secure storage of encrypted keys. Accordingly, except one "must-have" hardware cryptographic module or ECU with a hardware cryptographic module, private cryptographic keys can be stored in a cluster of ECUs without a hardware cryptographic module, by using the disclosed method.

According to an embodiment of the present disclosure, a nesting layer is proposed to be able to use the unsecure memory outside the hardware cryptographic module to store the private cryptographic keys. That is, the disclosed method may be performed by the nesting layer. The nesting layer is logic that can be implemented in any suitable layer of the hardware cryptographic module or an ECU with a hardware cryptographic module, to enable the encryption of the long-term private cryptographic keys for storing in non-transitory memory outside the hardware cryptographic module in an untrusted environment, and in some embodiments the decryption of such keys. For example, the nesting layer may be encoded in the physical layer or the driver layer of the hardware cryptographic module. Thus, the suppliers of hardware cryptographic modules may find utility with the disclosed method and the present disclosure. In another example, the nesting layer may be implemented in the application layer of an ECU comprising the hardware cryptographic module, thereby being of use to suppliers of ECUs. The nesting layer comprises logic that makes use of the existing infrastructure of the hardware cryptographic module. For example, the disclosed method may call the cryptographic engine and the random number generator of the hardware cryptographic module to undertake the encryption and decryption steps described herein. The nesting layer may thus include logic necessary to implement the encryption/decryption algorithms and logic necessary to enable the state machine of the hardware cryptographic module to execute the logic. After encryption, the nesting layer instructs the sending of the encrypted private cryptographic keys out of the hardware cryptographic module for storage in the unsecure memory. The disclosed method may call the input-output interfaces of the hardware cryptographic module, among others, to undertake the step of storing in the unsecure memory. When other parties, e.g. other ECUs, require private cryptographic keys or perform cryptographic key exchanges, the nesting layer instructs the retrieval of the encrypted cryptographic key from the unsecure memory if stored therein and the decryption of the encrypted key in the secure environment. Thus, the nesting layer aids in enlarging the storage space for private cryptographic keys. The encryption and decryption performed by the nesting layer are supported by the hardware cryptographic module, which is already optimized for speed, resources and performance. Compared with software-based cryptographic modules, the overhead required for a hardware cryptographic module according to this disclosure to encrypt and decrypt is lesser. Further, the nesting layer does not require extra hardware cryptographic algorithms as it reuses the encryption functions existing in the hardware cryptographic module. Low overheads translate to faster implementation of the disclosed method. Therefore, the disclosed method may advantageously satisfy real-time processing requirements necessary for certain applications such as in the automotive domain.

The nesting layer is illustrated in Figs. 1 and 2. Fig. 1 illustrates that nesting layer 202 is configured to instruct the sending of the encrypted keys to non-transitory memory 104 via bus 110, while Fig. 2 illustrates that nesting layer 202 is configured to instruct the sending of the encrypted keys to both non-transitory memory 104 through bus 110 as well as non-transitory memory 1004 through interface 1008 and bus 1010. As mentioned above, nesting layer 202 is further configured to undertake the encryption and decryption algorithms disclosed herein. Further, Figs. 1 and 2 illustrate that nesting layer 202 is configured to send DEKs after decryption out of ECU 100 via bus 112 to other destinations to encrypt data.

The encrypted private cryptographic key or DEK may comprise of a pair of encrypted parameters. The production of the first encrypted parameter and the production of the second encrypted parameter result in the encryption of the DEK. The encryption of the DEK when the non-transitory memory of the hardware cryptographic module is insufficient, is described as follows.

The private cryptographic key is encrypted with a session parameter to produce a first encrypted parameter. The session parameter is short-term, that is, it is generated for each session and, in some cases, is deleted after each session is ended. The session parameter may be generated by the hardware cryptographic module, for each private cryptographic key that is to be stored in the second non-transitory memory. The session parameter may be a parameter included as a variable in an encryption algorithm to encrypt the private cryptographic key. The session parameter may comprise a short-term session key and a random number. The session key may be generated by a key generator and may be deleted or retained after computation of the first encrypted parameter is completed. The random number may be generated by a random number generator and may either be retained or deleted after computation of the first encrypted parameter is completed. If retained, the session parameter may be stored in volatile memory in the hardware cryptographic module and may be used to produce the second encrypted parameter. Inclusion of the random number may advantageously prevent a man-in-the-middle attack as the random number is generated for the specific computation. Furthermore, the random number provides freshness value to the encryption, advantageously reducing or negating the risk of replay attacks. The encryption algorithm to produce the first encrypted parameter may include computations involving the random number and the session key. The encryption algorithm may be generated by a cryptographic engine of the hardware cryptographic module and implemented by the nesting layer. Encryption algorithms suitable to be used to produce the first encrypted parameter are not particularly limited, and an example is the advanced encryption standard.

If the session parameter is retained, e.g. volatile memory 206, after computation of the first encrypted parameter is completed, encryption of the session parameter is advantageous in the event the volatile memory is compromised. Encryption of the session parameter is advantageous also if the session parameter exists throughout a session in the volatile memory of the hardware cryptographic module. Therefore, the disclosure provides that the session parameter is encrypted with a nesting parameter to produce a second encrypted parameter. In embodiments where the session parameter includes a short-term session key, the session key may be encrypted with the nesting parameter to produce the second encrypted parameter. Once the session parameter is encrypted, any duplications of the session parameter in volatile memory may be deleted. The nesting parameter may be a parameter included as a variable in an encryption algorithm to encrypt the session parameter. The nesting parameter may be generated by the hardware cryptographic module or the nesting layer of the hardware cryptographic module for encrypting the session parameter. The nesting parameter may be long-term and may persist even when there is no power to the hardware cryptographic module. Thus, generation of the nesting parameter may occur only once or a small number of times in the lifetime of the ECU. In such examples, proper, secure storage of the nesting parameter is necessary. Therefore, the nesting parameter may be stored in the secure non-transitory memory of the hardware cryptographic module. Alternatively, the long-term nesting parameter may further be encrypted and stored in unsecure memory.

The nesting parameter may comprise a nesting key and a random number. The nesting key may be a long-term private cryptographic key different from the DEK. The long-term nesting key may be used to encrypt multiple session parameters from different encryption computations. In such example, there may be one nesting key for multiple DEKs that are stored in unsecure memory. The assignment of DEKs to a nesting key may be programmed as per requirement or need, for example a nesting key is assigned sequentially for the first n number of DEKs, or in another example assigned to DEKs associated with specific ECUs. Generally, the greater the storage capacity of the non-transitory memory and the capability of the volatile memory, the higher the ratio of nesting key to DEK, i.e. one nesting key to a lesser number of DEKs since more nesting keys can be stored. The long-term nesting key may be stored in the non-transitory memory of the hardware cryptographic module. In this example, as there are advantageously fewer nesting keys than DEKs, the secure memory may not be used up as quickly as when all DEKs are routed for storage in the secure memory. Where the nesting parameter includes a random number, the random number may be the one used to produce the first encrypted parameter. Alternatively, the random number used to produce the second encrypted parameter may be different from the one used to produce the first encrypted parameter, for example the random number used to produce the second encrypted parameter may be different but correlated with the random number used to produce the first encrypted parameter. Upon completion of the computation or encryption, the random number may be deleted. Encryption algorithms suitable to be used to produce the second encrypted parameter are similarly not particularly limited, and an example includes the advanced encryption standard.

The disclosed method therefore advantageously provides a two-layer encryption to securely store a private cryptographic key in an unsecure storage. Upon completion of the two-layer encryption, the encrypted private cryptographic key or the pair of encrypted parameters are sent outside of the hardware cryptographic module and stored in the unsecure storage, while the nesting parameter may be securely stored in the secure storage.

In the event a stored private cryptographic key is required, the method may further comprise, upon determination that the private cryptographic key is not stored in the non-transitory memory of the hardware cryptographic module, retrieving the encrypted private cryptographic key from the second non-transitory memory. Stored keys may be required when data needs to be encrypted, for example a stored private cryptographic key for encrypting speed data may be required to encrypt new speed data or in another example, a stored private cryptographic key may be required when key exchanges are made. As the encrypted private cryptographic key comprises the pair of encrypted parameters, the encrypted parameters may be retrieved from the unsecure storage for decryption. The decryption process is done in the secure environment of the hardware cryptographic module. The decryption process may be implemented by the nesting layer of the hardware cryptographic module. The decryption process is similarly a two-step or two-layer decryption, whereby each encrypted parameter is decrypted to obtain the private cryptographic key.

The first decryption step may comprise decrypting, by the hardware cryptographic module, the second encrypted parameter with the nesting parameter retrieved from the non-transitory memory of the hardware cryptographic module to obtain the session parameter. The nesting key may be retrieved from the secure memory to the nesting layer for decryption. The decryption may obtain the session parameter, for example the session key and the random number, used during the step of encrypting the private cryptographic key.

The second decryption step may comprise decrypting, by the hardware cryptographic module, the first encrypted parameter with the session parameter obtained in the first decryption step. The private cryptographic key is obtained upon decryption of the first and second encrypted parameters.

Accordingly, in embodiments, the disclosed procedure is firstly to have the nesting layer implement the generation of a plurality of keys and/or parameters, such as a long-term nesting key and a long-term DEK. When it is determined that the DEK is to be stored in unsecure memory, the nesting layer implements the generation of a short-term session key and a random number (RND), whereby the session key is used to encrypt the DEK with encryption algorithm that involves computation with the RND, to produce a first encrypted parameter. The nesting key is then used to encrypt the session key with encryption algorithm that involves computation with the RND again, to produce a second encrypted parameter. The first and second encrypted parameters, which together make up the encrypted DEK, are then sent to the unsecure memory. In mathematical terms, an example of the encryption of an $n^{th}$ private cryptographic key may be:

$$m_{1n} = E_{ks} (k_n, RND)$$

$$m_{2n} = E_{kNEST} (k_s, RND)$$

$$k_n' = (m_{1n}, m_{2n})$$

wherein

$k_n$ (n = 1, 2, 3 ...) refers to the long-term private cryptographic key or DEK which exists when power is on or off;
$k_n'$ refers to the encrypted $k_n$ and comprises the first encrypted parameter $m_{1n}$ and the second encrypted parameter $m_{2n}$;
$k_{NEST}$ refers to the long-term nesting key which exists when power is on or off;
$k_s$ refers to the short-term session key which is newly generated for each session;
E refers to the encryption algorithm used in the hardware cryptographic module.

In an embodiment, there is provided an electronic control unit comprising: at least one processor; non-transitory memory; and a hardware cryptographic module in electronic communication with the non-transitory memory and the at least one processor. The hardware cryptographic module comprises non-transitory memory and a processor or state machine. At least one of the non-transitory memories comprises a plurality of instructions stored thereon which, when executed by at least one of the processors, cause the at least one processor to perform the disclosed method. The plurality of instructions may form the nesting layer disclosed herein.

Where the plurality of instructions are stored in the non-transitory memory of the hardware cryptographic module, the plurality of instructions may be stored together with the firmware of the hardware cryptographic module in the non-transitory memory. In this example, the plurality of instructions may be implemented in the firmware layer or driver layer of the hardware cryptographic module. Alternatively, as mentioned above, the plurality of instructions may be implemented using hardware or the physical layer, which may involve increasing the physical components, such as circuitry, and therefore increase the cost. The plurality of instructions stored in the hardware cryptographic module may be executed by the processor of the hardware cryptographic module. If the hardware cryptographic module comprises a coprocessor and the electronic control unit comprises the main processor, the ECU's processor may instruct the hardware cryptographic module's coprocessor to perform at least some or all the steps of the method, the ECU's processor being configured to perform the remaining steps of the method.

Where the plurality of instructions are stored in the non-transitory memory of the electronic control unit, the plurality of instructions may be coded as an application in the application layer. In another embodiment, the plurality of instructions may be coded partially in the electronic control unit and partially in the hardware cryptographic module. The plurality of instructions may be executed by the processor of the electronic control unit, the processor or state machine of the hardware cryptographic module, or a combination of both processors.

In embodiments, the instructions may cause the processor(s) to determine whether non-transitory memory of the hardware cryptographic module is available, in response to a request to store a private cryptographic key. In the event the non-transitory memory of the hardware cryptographic module is available, the instructions may cause the private cryptographic key to be stored therein. In the event the non-transitory memory of the hardware cryptographic module is insufficient or not available, the instructions may cause the private cryptographic key to be encrypted with a session parameter, such as one disclosed herein, to produce a first encrypted parameter; and the session parameter to be encrypted with a nesting parameter, such as one disclosed herein, to produce a second encrypted parameter. The first encrypted parameter and the second encrypted parameter make up the encrypted private cryptographic key. The instructions may then cause the encrypted private cryptographic key to be stored in a second non-transitory memory having lower security certification than the non-transitory memory of the hardware cryptographic module. The instructions may cause at least one of the processors to undertake any of the steps described above.

The scope of protection is defined by the claims.

**Claims**

1. A method of managing private cryptographic keys, the method comprising:

   determining whether non-transitory memory (204) of a hardware cryptographic module (200) is available in response to a request to store a private cryptographic key;
   in the event the non-transitory memory (204) of the hardware cryptographic module (200) is available, storing the private cryptographic key therein;
   in the event the non-transitory memory (204) of the hardware cryptographic module (200) is insufficient:

      encrypting, by the hardware cryptographic module (200), the private cryptographic key with a session parameter comprising a short-term session key and a random number, to produce a first encrypted parameter;
      encrypting, by the hardware cryptographic module (200), the session parameter with a nesting parameter comprising a nesting key and a random number, to produce a second encrypted parameter, wherein the first encrypted parameter and the second encrypted parameter make up an encrypted private cryptographic key;
      storing the encrypted private cryptographic key in a second non-transitory memory (104) having lower security certification than the non-transitory memory (204) of the hardware cryptographic module (200).

2. The method of any claim 1, wherein the session parameter is generated, by the hardware cryptographic module (200), for each private cryptographic key to be stored in the second non-transitory memory (104).

3. The method of any preceding claim, wherein the short-term session key is encrypted with the nesting parameter to produce the second encrypted parameter.

4. The method of any preceding claim, further comprising storing the nesting parameter in the non-transitory memory (204) of the hardware cryptographic module (200).

**5.** The method of any preceding claim, in the event a stored private cryptographic key is required, the method further comprises:

upon determination that the private cryptographic key is not stored in the non-transitory memory (204) of the hardware cryptographic module (200),

retrieving the encrypted private cryptographic key from the second non-transitory memory (104);
decrypting, by the hardware cryptographic module (200), the second encrypted parameter with the nesting parameter retrieved from the non-transitory memory (204) of the hardware cryptographic module (200) to obtain the session parameter;
decrypting, by the hardware cryptographic module (200), the first encrypted parameter with the session parameter to obtain the private cryptographic key.

**6.** The method of any preceding claim, wherein the hardware cryptographic module (200) is incorporated into a first electronic control unit (100) of a vehicle.

**7.** The method of claim 6, wherein the second non-transitory memory (104) is part of the first electronic control unit (100) or is incorporated into a second electronic control unit (1000).

**8.** An electronic control unit (100) comprising:

at least one processor (105);
non-transitory memory (104);
a hardware cryptographic module (200) in electronic communication with the non-transitory memory (104) and the at least one processor (105), the hardware cryptographic module (200) comprising non-transitory memory (204) and a processor (205),
wherein at least one of said non-transitory memories (104, 204) comprises a plurality of instructions stored thereon which, when executed by at least one of said processors (105, 205), cause the at least one processor (105, 205) to perform the method of any preceding claim.

**9.** The electronic control unit (100) of claim 8, which is a gateway device.

**10.** The electronic control unit (100) of claim 9, wherein the non-transitory memory of the gateway device is configured to store encrypted private cryptographic keys.

**11.** The electronic control unit (100) of any one of claims 8-10, wherein the electronic control unit (100) is in electronic communication with a second electronic control unit (1000) comprising non-transitory memory (1004) configured to store encrypted private cryptographic keys.

**Patentansprüche**

**1.** Verfahren zum Verwalten von privaten kryptografischen Schlüsseln, wobei das Verfahren umfasst:

Ermitteln, ob als Reaktion auf eine Anforderung zum Speichern eines privaten kryptografischen Schlüssels ein nicht-flüchtiger Speicher (204) eines kryptografischen Hardwaremoduls (200) zur Verfügung steht;
in dem Fall, in dem der nicht-flüchtige Speicher (204) des kryptografischen Hardwaremoduls (200) zur Verfügung steht, Speichern des privaten kryptografischen Schlüssels in demselben;
in dem Fall, in dem der nicht-flüchtige Speicher (204) des kryptografischen Hardwaremoduls (200) nicht ausreichend ist:

Verschlüsseln, durch das kryptografische Hardwaremodul (200) des privaten kryptografischen Schlüssels mit einem Sitzungsparameter, der einen kurzzeitigen Sitzungsschlüssel und eine Zufallszahl umfasst, um einen ersten verschlüsselten Parameter zu erzeugen;
Verschlüsseln, durch das kryptografische Hardwaremodul (200) des Sitzungsparameters mit einem Verschachtelungsparameter, der einen Verschachtelungsschlüssel und eine Zufallszahl umfasst, um einen zweiten verschlüsselten Parameter zu erzeugen, wobei der erste verschlüsselte Parameter und der zweite verschlüsselte Parameter einen verschlüsselten privaten kryptografischen Schlüssel bilden;
Speichern, des verschlüsselten privaten kryptografischen Schlüssels in einem zweiten nicht-flüchtigen Speicher (104), der eine niedrigere Sicherheitszertifizierung als der nicht-flüchtige Speicher (204) des kryptografischen Hardwaremoduls (200) aufweist.

**2.** Verfahren nach Anspruch 1, wobei der Sitzungsparameter durch das kryptografische Hardwaremoduls (200) für jeden privaten kryptografischen Schlüssel erzeugt wird, der in dem zweiten nicht-flüchtigen Speicher (104) gespeichert werden soll.

**3.** Verfahren nach einem der vorhergehenden Ansprüche, wobei der kurzzeitige Sitzungsschlüssel mit dem Verschachtelungsparameter verschlüsselt wird, um den zweiten verschlüsselten Parameter zu erzeugen.

**4.** Verfahren nach einem der vorhergehenden Ansprüche, das ferner ein Speichern des Verschachtelungsparameters in dem nicht-flüchtigen Speicher (204) des kryptografischen Hardwaremoduls (200) umfasst.

**5.** Verfahren nach einem der vorhergehenden Ansprüche, wobei das Verfahren in dem Fall, in dem ein privater kryptografischer Schlüssel erforderlich ist, ferner umfasst:

nach dem Ermitteln, dass der private kryptografische Schlüssel nicht in dem nicht-flüchtigen Speicher (204 des kryptografischen Hardwaremoduls (200) gespeichert ist,
Abrufen, des verschlüsselten privaten kryptografischen Schlüssels aus dem zweiten nicht-flüchtigen Speicher (104);
Entschlüsseln, durch das kryptografische Hardwaremodul (200), des zweiten verschlüsselten Parameters mit dem Verschachtelungsparameter, der aus dem nicht-flüchtigen Speicher (204) des kryptografischen Hardwaremoduls (200) abgerufen wird, um den Sitzungsparameter zu erhalten;
Entschlüsseln, durch das kryptografische Hardwaremodul (200), des ersten verschlüsselten Parameters mit dem Sitzungsparameter, um den privaten kryptografischen Schlüssel zu erhalten.

**6.** Verfahren nach einem der vorhergehenden Ansprüche, wobei das kryptografische Hardwaremodul (200) in eine erste elektronische Steuereinheit (100) eines Fahrzeugs integriert ist.

**7.** Verfahren nach Anspruch 6, wobei der zweite nicht-flüchtige Speicher (104) Teil der ersten elektronischen Steuereinheit (100) ist oder in eine zweite elektronische Steuereinheit (1000) integriert ist.

**8.** Elektronische Steuereinheit (100), umfassend:

mindestens einen Prozessor (105);
einen nicht-flüchtigen Speicher (104);
ein kryptografisches Hardwaremodul (200) in einer elektronischen Kommunikation mit dem nicht-flüchtigen Speicher (104) und dem mindestens einen Prozessor (105), wobei das kryptografische Hardwaremodul (200) einen nicht-flüchtigen Speicher (204) und einen Prozessor (205) umfasst;
wobei mindestens einer der nicht-flüchtigen Speicher (104, 204) eine Vielzahl von Anweisungen umfasst, die in dem desselben gespeichert sind und die, wenn sie von mindestens einem der Prozessoren (105, 205) ausgeführt werden, den mindestens einen Prozessor (105, 205) veranlassen, das Verfahren nach einem der vorhergehenden Ansprüche durchzuführen.

**9.** Elektronische Steuereinheit (100) nach Anspruch 8, die eine Gateway-Vorrichtung ist.

**10.** Elektronische Steuereinheit (100) nach Anspruch 9, wobei der nicht-flüchtige Speicher der Gateway-Vorrichtung konfiguriert ist zum Speichern der verschlüsselten privaten kryptografischen Schlüssel.

**11.** Elektronische Steuereinheit (100) nach einem der Ansprüche 8 bis 10, wobei die elektronische Steuereinheit (100) in einer elektronischen Kommunikation mit einer zweiten elektronischen Steuereinheit (1000) steht, die einen nicht-flüchtigen Speicher (1004) umfasst, der konfiguriert ist zum Speichern von verschlüsselten privaten kryptografischen Schlüsseln.

**Revendications**

**1.** Procédé de gestion de clés cryptographiques privées, comprenant les étapes consistant à :

déterminer si une mémoire non transitoire (204) d'un module cryptographique matériel (200) est disponible en réponse à une demande de stockage d'une clé cryptographique privée ;
si la mémoire non transitoire (204) du module cryptographique matériel (200) est disponible, y stocker la clé cryptographique privée ;
si la mémoire non transitoire (204) du module cryptographique matériel (200) est insuffisante :

crypter, par le module cryptographique matériel (200), la clé cryptographique privée avec un paramètre de session comprenant une clé de session à court terme et un nombre aléatoire, afin de produire un premier paramètre crypté ;
crypter, par le module cryptographique matériel (200), le paramètre de session avec un paramètre d'imbrication comprenant une clé d'imbrication et un nombre aléatoire, afin de produire un second paramètre crypté, le premier paramètre crypté et le second paramètre crypté constituant une clé cryptographique privée cryptée ;
stocker la clé cryptographique privée cryptée dans une seconde mémoire non transitoire (104) ayant une certification de sécurité inférieure à celle de la mémoire non transitoire (204) du module cryptographique matériel (200).

**2.** Procédé selon la revendication 1, dans lequel le paramètre de session est généré, par le module cryptographique matériel (200), pour chaque clé cryptographique privée devant être stockée dans la seconde mémoire non transitoire (104).

**3.** Procédé selon l'une quelconque des revendications précédentes, dans lequel la clé de session à court terme est cryptée avec le paramètre d'imbrication afin de produire le second paramètre crypté.

**4.** Procédé selon l'une quelconque des revendications précédentes, comprenant en outre l'étape consistant à stocker le paramètre d'imbrication dans la mémoire non transitoire (204) du module cryptographique matériel (200).

**5.** Procédé selon l'une quelconque des revendications précédentes, le procédé comprenant en outre, si une clé cryptographique privée stockée est requise, les étapes consistant à :

après avoir déterminé que la clé cryptographique privée n'est pas stockée dans la mémoire non transitoire (204) du module cryptographique matériel (200),
récupérer la clé cryptographique privée cryptée dans la seconde mémoire non transitoire (104) ;
décrypter, par le module cryptographique matériel (200), le second paramètre crypté avec le paramètre d'imbrication récupéré dans la mémoire non transitoire (204) du module cryptographique matériel (200) afin d'obtenir le paramètre de session ;
décrypter, par le module cryptographique matériel (200), le premier paramètre crypté avec le paramètre de session afin d'obtenir la clé cryptographique privée.

**6.** Procédé selon l'une quelconque des revendications précédentes, dans lequel le module cryptographique matériel (200) est incorporé dans une première unité de commande électronique (100) d'un véhicule.

**7.** Procédé selon la revendication 6, dans lequel la seconde mémoire non transitoire (104) fait partie de la première unité de commande électronique (100) ou est incorporée dans une seconde unité de commande électronique (1000).

**8.** Unité de commande électronique (100), comprenant :

au moins un processeur (105) ;
une mémoire non transitoire (104) ;
un module cryptographique matériel (200) en communication électronique avec la mémoire non transitoire (104) et l'au moins un processeur (105), le module cryptographique matériel (200) comprenant une mémoire non transitoire (204) et un processeur (205),
au moins une desdites mémoires non transitoires (104, 204) comprenant une pluralité d'instructions stockées sur celle-ci qui, lorsqu'elles sont exécutées par au moins un desdits processeurs (105, 205), amènent l'au moins un processeur (105, 205) à exécuter le procédé selon l'une quelconque des revendications précédentes.

**9.** Unité de commande électronique (100) selon la revendication 8, qui est un dispositif passerelle.

**10.** Unité de commande électronique (100) selon la revendication 9, la mémoire non transitoire du dispositif passerelle étant configurée pour stocker des clés cryptographiques privées cryptées.

**11.** Unité de commande électronique (100) selon l'une quelconque des revendications 8 à 10, l'unité de commande électronique (100) étant en communication électronique avec une seconde unité de commande électronique (1000) comprenant une mémoire non transitoire (1004) configurée pour stocker des clés cryptographiques privées cryptées.

Fig. 1

Fig. 2

**EP 3 834 361 B1**

## REFERENCES CITED IN THE DESCRIPTION

### Patent documents cited in the description

- US 2011289324 A1
- US 6393565 B
- US 2016156468 A1